# EUROPEAN PATENT SPECIFICATION

(11) **EP 3 639 228 B1**
(45) Date of publication and mention of the grant of the patent: **04.02.2026**
(21) Application number: 18740323.3
(22) Date of filing: 13.06.2018
(51) Int. Cl.: G06Q 20/32, H04W 4/02, H04W 4/80

(54) **METHOD AND INFRASTRUCTURE FOR ENABLING A FINANCIAL PAYMENT TRANSACTION WITH A SMART MOBILE DEVICE (SMD)**
VERFAHREN UND INFRASTRUKTUR ZUR ERMÖGLICHUNG EINER FINANZIELLEN ZAHLUNGSTRANSAKTION MIT EINER INTELLIGENTEN MOBILEN VORRICHTUNG (SMD)
PROCÉDÉ ET INFRASTRUCTURE D'ACTIVATION D'UNE TRANSACTION DE PAIEMENT FINANCIÈRE À L'AIDE D'UN DISPOSITIF MOBILE INTELLIGENT (SMD)

(30) Priority: 13.06.2017 NL 2019063
(43) Date of publication of application: 22.04.2020
(73) Proprietor: Mobyyou B.V., 5061 HW Oisterwijk (NL)
(72) Inventor: VAN HERP, Petrus Joannes Wilhelmus, 5012 AP Tilburg (NL); OONK, Johannes Hermanus Petrus Maria, 5045 SN Tilburg (NL)
(74) Representative: Algemeen Octrooi- en Merkenbureau B.V.
(86) International application number: PCT/NL2018/050384
(87) International publication number: WO 2018/231057

(56) References cited:
- WO-A1-2015/175222
- US-A1- 2015 170 132
- US-A1- 2015 371 210

## Description

The invention relates to a method for enabling a financial payment transaction between a smart mobile device (SMD) including an accelerometer and a payment terminal as well as to the infrastructure for enabling the start of a financial payment transaction according this method.

A smart mobile device (SMD) is an electronic device, that may be connected to other devices or networks using various wireless protocols like for instance NFC, Bluetooth, Wi-Fi, 3G and 4G. The smart mobile device may operate at least partially interactively and may also be able to perform autonomous computing processes. Some examples of smart mobile devices are mobile phones, smartphones, tablets, smartwatches and the like. Use of SMD's is widespread and various types of financial transactions may already be realized by making use of a SMD. For instance payments may be made by logging in on a network with and SMD and subsequently the transaction details may be entered. US 2015/170132 A1 for example discloses a method of performing a financial transaction between a mobile device and a payment terminal.

The present invention has for its object to provide a method and the infrastructure to enable a financial payment transaction with a SMD that has an enhanced user-friendliness, is more stable in use and/or provides enhanced security compared to the prior art solutions for realizing SMD controlled payment transactions.

To realize this object the present invention provides a method for enabling a financial payment transaction between a SMD including an accelerometer and a payment terminal, comprising the subsequent method steps: A) realizing a secure IP-connection for data exchange, such as mutual identification data, between the SMD and the payment terminal based upon the reception of a Bluetooth signal from the SMD by the payment terminal that exceeds a defined first minimal Bluetooth signal strength level; B) monitoring the changes in the SMD Bluetooth signal strength of the Bluetooth signal received by the connected payment terminal; C) after the SMD Bluetooth signal strength of the Bluetooth signal received by the connected payment terminal exceeding a defined second minimal Bluetooth signal strength level that is higher than the first minimal Bluetooth signal strength level; activating the monitoring by the payment terminal of accelerometer signals generated by the connected SMD; D) dependent on combined Bluetooth signal strength level changes and the SMD accelerometer signals monitored by the payment terminal activating a payment transaction mode wherein the secure IP-connection is enabled to exchange payment transaction data between the SMD and the connected payment terminal; and E) upon mutual approval of the connected SMD and payment terminal effecting a financial payment transaction.

As soon as a payment terminal notices a Bluetooth signal from a SMD that exceeds a specified (first) signal strength level a secure IP-connection is build up between the SMD and the payment terminal. Bluetooth is a wireless technology standard for exchanging data over short distances by building up a personal area network and the received Bluetooth signal strength is a measurement of the power present in a received radio signal and is also referred to as "Received Signal Strength Indicator" or RSSI. Normally the maximum range of Bluetooth communication lies between 1 - 10 meter. A "visual connection" between the SMD and the payment terminal is not required; due to the GHz-radio secure IP-connection the Bluetooth signal also passes solid materials.

At this first moment of communication set up payment transaction are not enabled (yet) but the secure IP-connection is used for instance for mutual identification of the SMD and the payment terminal. As will be explained later in more detail the mutual identification may also trigger a specific type of signal handling protocol. For instance as the type of SMD or a specific SMD is recognized this may influence the interpretation of the SMD signals by the payment terminal) as inked to that type of SMD or that specific user. Also vice versa the SMD may recognize a specific payment terminal and/or a type of payment terminal which may influence the building up of an IP-connection (or the avoidance of further development of a started connection in case an SMD is programmed to minimize the contact with specific payment terminal of types of terminals).

As soon as the SMD and the payment terminal are connected according processing step A) a "pico-net" is realized. A single payment terminal may realize several pico-nets at the same moment at the same location (also referred to as a "scatter-net") so that plural SMD may realizing financial payment transactions at the same moment in cooperation with a single payment terminal. As the secure IP-connection according method step A) is established the changes in the SMD Bluetooth signal strength are monitored by the payment terminal. In case the signal strength becomes smaller than a specified level the IP-connection may be stopped, but when the signal strength increases to a defined second signal strength level according processing step C) the communication between the SMD and the payment terminal may further escalate. The second signal strength level for further communication escalation may be made dependent from a previous identification of the SMD type or specific SMD, but if the level for more intensive communication is exceeded the payment terminal will also monitor the signals generated by the accelerometer of the connected SMD. This also changes the communication of the SMD and the payment terminal to a "payment transaction mode", the communication level that enables to fulfil payment transactions. So additional to the variations of the Bluetooth signal strength also the movements of the SMD will now be monitored. This allows to provide a more complete picture of the SMD movements in the vicinity of the payment terminal and thus enables to establish a more secure contact than in the situation wherein only the signal strength level is provides the vicinity data. There may for instance be situations wherein the Bluetooth signal strength level decreases while the SMD is moved closer to the payment terminal. Reasons may for instance be that the contact is locally more or less screened during the movement of the SMD and/or that although the distance between a SMD and payment terminal is diminished the communicating transceivers in the SMD and payment terminal is not diminished. Now the present invention solves, or at least limits, this problem as there is additional information of the relative movement of the payment terminal and the

SMD. The additional information exchange including accelerometer signals enables to establish a more secure contact between the payment terminal end the SMD and thus enhances the stability and security of payments transactions. The final step for the payment is that both parties (payment terminal and SMD) approve the execution of a specific financial payment transaction.

After realizing the secure IP-connection between the SMD and the payment terminal according processing step A) the type of Bluetooth signal sending SMD may be identified by the payment terminal and the second minimal Bluetooth signal strength level for activating the monitoring by the payment terminal of accelerometer signals generated by the connected SMD may be set dependent on the identified SMD type. Additionally or alternatively after realizing a secure IP-connection between the SMD and the payment terminal according processing step A) the type of Bluetooth signal sending SMD may be identified by the payment terminal and the processing of the SMD Bluetooth signal strength and the accelerometer signals according processing step D) may be made dependent of the identified SMD type. Different types of SMD's have different Bluetooth signal characteristics and the identification of a specific type enables to adopt the processing of the Bluetooth signal to the typical Bluetooth signal characteristics thus enhancing the reliability of the information.

After activating the payment transaction mode between the connected SMD and the payment terminal according processing step D) the payment transaction mode may be maintained during at least a defined period independent on the further changes in the Bluetooth signal strength level and the accelerometer signals of the connected SMD. In this alternative the activation of the payment transaction mode opens a time window (time period) to fulfil a payment transaction independent of the relative movement of the payment terminal and SMD. A condition herewith is that the payment terminal and SMD are still within the maximum Bluetooth communication distance. As an alternative is also possible to make use of such a set time window until the monitored Bluetooth signal strength level decreases to below a preselected disconnection Bluetooth signal strength level. Here as an additional security rule (indirectly) the maximum distance between the SMD and the payment terminal is controlled.

It is also possible that the characteristics of a specific SMD are stored in a database, which database characteristics are used by the payment terminal to enable a dedicated signal processing of a SMD when a recurring secure IP-connection is realized between the SMD and the payment terminal. The SMD characteristics may be stored in a central database that exchanges data with at least one payment terminals. In such a situation the communication and payment history may be included in new communication and payment situations. This enhances the options to provide service and to additionally secure the payment transactions. For instance if the behaviour of an SMD is substantially different from previous behaviour (both in the required payment transactions as in the relative movement of the SMD) the execution of a payment transaction may be prevented. It is also possible to use a central SMD characteristics database that exchanges data with two or more payment terminals. This makes it possible to "recognise" a SMD when making contact with a certain payment terminal and to adapt the communication between the SMD and the payment terminal dependent from previous communication between that SMD and one or more payment terminals in the past, for instance SMD (client) preferences, specific behaviour type for security purposes and/or specific SMD restrictions may be included in the data exchange between the SMD and the payment terminal.

The signals generated by the accelerometer of the connected SMD representing movements in various dimensions (normally at least three dimensions) may be reduced to a single accelerometer movements representing signal. This enables simpler processing of the accelerometer data. For effecting a requested financial payment transaction at least one of the SMD and/or the payment terminal may communicates with a back office. With activating a payment transaction mode also one or more additional information exchange requiring services between the payment terminal and the SMD may activated, like for instance exchange of loyalty related information, advertisements, dedicated offerings, consumer behaviour information and so on.

The present invention also includes a method for realizing a financial payment transaction that has been started as disclosed above, wherein the requested financial payment transaction is submitted to a payment transaction back office and after approval by the payment transaction back office is reported back to at least one of the SMD and/or the payment terminal.

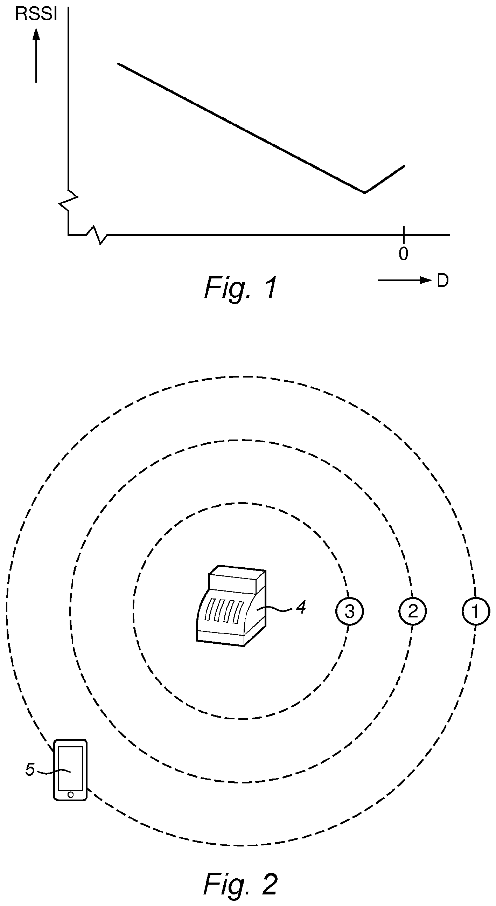

Furthermore the present invention includes the infrastructure for enabling the start of a financial payment transaction as disclosed above, comprising: a requested financial payment transaction effecting back office; and at least one intelligent payment terminal with a Bluetooth signal receiver and a programmable processor that is connected to the financial payment transaction effecting back office. The intelligent payment terminal may be provided with a Bluetooth signal transmitter for enabling direct communication between the intelligent payment terminal and a connected SMD. The intelligent payment terminal may also be connected to a database with SMD coupled technical specifications based upon previous SMD initiated financial payment transactions and/or with SMD coupled information based upon previous SMD initiated financial payment transactions. The present invention will be further elucidated on the basis of the non-limitative exemplary embodiments shown in the following figures. Herein shows: figure 1 a graph showing the Bluetooth signal strength (RSSI) in relation to the distance between the payment terminal and a SMD;

figure 2 a schematic view on the different communication levels around a payment terminal and a SMD; and

figure 3 a schematic view according figure 2 with a central database.

Figure 1 shows a graph representing the received Bluetooth signal strength (RSSI) in relation to the distance (D) between the payment terminal and a SMD. As expected the received signal strength increases (which is seen as a decrease in the RSSI level) when the distance between the payment terminal and the SMD decreases. However at close distance between the payment terminal and a SMD an opposite effect may be seen; here the received signal strength decreases while the distance between the payment terminal and a SMD still further decreases. The conclusion may be that there is no linear relation between the received Bluetooth signal strength (RSSI) in relation to the distance between the payment terminal and a SMD. Figure 2 shows a schematic view on the different communication levels 1 , 2, 3 around a payment terminal 4. A first communication level 1 is triggered when a the Bluetooth signal strength of a SMD 5 exceeds a first minimal Bluetooth signal strength level, the payment terminal 4 now starts monitoring the changes in the SMD Bluetooth signal strength and the SMD (or SMD-type) may be identified. At exceeding a second Bluetooth signal strength level the communication between the SMD 5 and the payment terminal 4 a second communication level 2 is started during which also the SMD accelerometer signals are monitored by the payment terminal 4. The third and last communication level 3 is started as a result of the processing of the combined data of the Bluetooth signal strength and the SMD accelerometer signals. At this third communication level 3 a financial payment transaction may be effected.

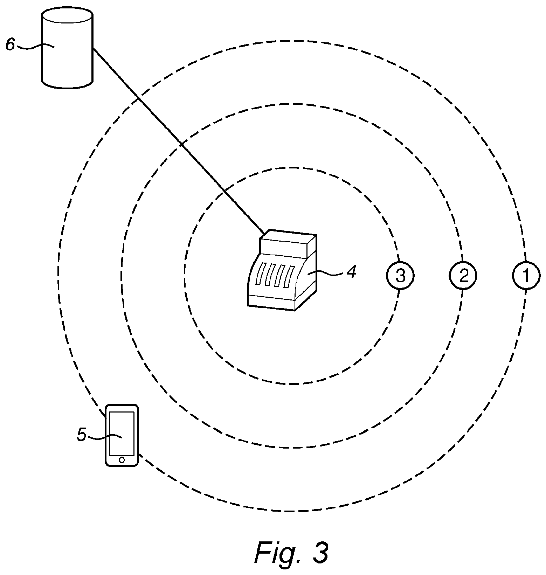

Figure 3 also shows a schematic view on the different communication levels 1 , 2, 3, around a payment terminal 4 however here the payment terminal 4 is connected to a central databases 6. This central databases 6 may contain information enabling the identification of the SMD 5 (or the type of SMD 5) as well as that the central databases 6 may contain information relating the previous (historical) behaviour and use of a SMD. The central database 6 may also be linked to other payment terminals 4 and/or other peripheral equipment of automated sytems.

## Claims

1. Method for enabling a financial payment transaction between a smart mobile device (SMD) including an accelerometer and a payment terminal, comprising the subsequent method steps:
A) realizing a secure IP-connection for data exchange, such as mutual identification data, between the SMD and the payment terminal based upon the reception of a Bluetooth signal from the SMD by the payment terminal that exceeds a defined first minimal Bluetooth signal strength level;
B) monitoring the changes in the SMD Bluetooth signal strength of the Bluetooth signal received by the connected payment terminal;
C) after the SMD Bluetooth signal strength of the Bluetooth signal received by the connected payment terminal exceeding a defined second minimal Bluetooth signal strength level that is higher than the first minimal Bluetooth signal strength level; activating the monitoring by the payment terminal of accelerometer signals generated by the connected SMD;
D) dependent on combined Bluetooth signal strength level changes and the SMD accelerometer signals monitored by the payment terminal activating a payment transaction mode wherein the secure IP-connection is enabled to exchange payment transaction data between the SMD and the connected payment terminal; and
E) upon mutual approval of the connected SMD and payment terminal effecting a financial payment transaction.

2. Method for enabling a financial payment transaction according claims 1 , **characterised in that** after realizing the secure IP-connection between the SMD and the payment terminal according processing step A) the type of Bluetooth signal sending SMD is identified by the payment terminal and the second minimal Bluetooth signal strength level for activating the monitoring by the payment terminal of accelerometer signals generated by the connected SMD is set dependent on the identified SMD type.

3. Method for enabling a financial payment transaction according claims 1 or 2, **characterised in that** after realizing the secure IP-connection between the SMD and the payment terminal according processing step A) the type of Bluetooth signal sending SMD is identified by the payment terminal and the processing of the SMD Bluetooth signal strength and the accelerometer signals according processing step D) is made dependent of the identified SMD type.

4. Method for enabling a financial payment transaction according any of the claims 1 - 3, **characterised in that** after activating the payment transaction mode between the connected SMD and the payment terminal according processing step D) the payment transaction mode is maintained during at least a defined period independent on the further changes in the Bluetooth signal strength level and the accelerometer signals of the connected SMD.

5. Method for enabling a financial payment transaction according any of the claims 1 - 3, **characterised in that** after activating the payment transaction mode between the connected SMD and the payment terminal according processing step D) the payment transaction mode is maintained until the monitored Bluetooth signal strength level decreases to below a preselected disconnection Bluetooth signal strength level.

6. Method for enabling a financial payment transaction according any of the preceding claims, **characterised in that** characteristics of a specific SMD are stored in a database of the payment terminal to be enable a dedicated signal processing of a SMD when a recurring secure IP-connection is realized between the SMD and the payment terminal.

7. Method for enabling a financial payment transaction according claim 6, **characterised in that** the SMD characteristics are stored in a central database that exchanges data with at least one payment terminals.

8. Method for enabling a financial payment transaction according any of the preceding claims, **characterised in that** the signals generated by the accelerometer of the connected SMD representing movements in various dimensions are reduced to a single accelerometer movements representing signal.

9. Method for enabling a financial payment transaction according any of the preceding claims, **characterised in that** at least one of the SMD and/or the payment terminal communicates with a back office for effecting a requested financial payment transaction.

10. Method for enabling a financial payment transaction according any of the preceding claims, **characterised in that** with activating a payment transaction mode also one or more additional information exchange requiring services between the payment terminal and the SMD are activated, like for instance exchange of loyalty related information, advertisements, dedicated offerings, consumer behaviour information and so on.

11. Method for realizing a financial payment transaction that has been started according any of the preceding claims, wherein the requested financial payment transaction is submitted to a payment transaction back office and after approval by the payment transaction back office is reported back to at least one of the SMD and/or the payment terminal.

12. Infrastructure for enabling the start of a financial payment transaction according one of the claims 1 - 10, said infrastructure comprising a smart mobile device (SMD) including an accelerometer, and an intelligent payment terminal, wherein said infrastructure is configured for performing the subsequent method steps:
A) realizing a secure IP-connection for data exchange, such as mutual identification data, between the SMD and the payment terminal based upon the reception of a Bluetooth signal from the SMD by the payment terminal that exceeds a defined first minimal Bluetooth signal strength level;
B) monitoring the changes in the SMD Bluetooth signal strength of the Bluetooth signal received by the connected payment terminal;
C) after the SMD Bluetooth signal strength of the Bluetooth signal received by the connected payment terminal exceeding a defined second minimal Bluetooth signal strength level that is higher than the first minimal Bluetooth signal strength level; activating the monitoring by the payment terminal of accelerometer signals generated by the connected SMD;
D) dependent on combined Bluetooth signal strength level changes and the SMD accelerometer signals monitored by the payment terminal activating a payment transaction mode wherein the secure IP-connection is enabled to exchange payment transaction data between the SMD and the connected payment terminal; and
E) upon mutual approval of the connected SMD and payment terminal effecting a financial payment transaction.

13. Infrastructure for financial payment transactions according claim 12, **characterised in that** the intelligent payment terminal is also provided with a Bluetooth signal transmitter for enabling direct communication between the intelligent payment terminal and a connected SMD.

14. Infrastructure for financial payment transactions according claim 12 or 13, **characterised in that** the intelligent payment terminal is connected to a database with SMD coupled technical specifications based upon previous SMD initiated financial payment transactions.

15. Infrastructure for financial payment transactions according any of the claims 12 - 14, **characterised in that** the intelligent payment terminal is connected to a database with SMD coupled information based upon previous SMD initiated financial payment transactions.

## Patentansprüche

1. Verfahren zum Ermöglichen einer finanziellen Zahlungstransaktion zwischen einer intelligenten mobilen Vorrichtung (SMD), einschließlich eines Beschleunigungsmessers, und einem Zahlungsendgerät, umfassend die folgenden Verfahrensschritte:
A) Realisieren einer sicheren IP-Verbindung für einen Datenaustausch, wie von gegenseitigen Identifikationsdaten, zwischen der SMD und dem Zahlungsendgerät basierend auf dem Empfang eines Bluetooth-Signals von der SMD durch das Zahlungsendgerät, das einen definierten ersten minimalen Bluetooth-Signalstärkepegel überschreitet;
B) Überwachen der Änderungen der SMD-Bluetooth-Signalstärke des durch das verbundene Zahlungsendgerät empfangenen Bluetooth-Signals;
C) nachdem die SMD-Bluetooth-Signalstärke des durch das verbundene Zahlungsendgerät empfangenen Bluetooth-Signals einen definierten zweiten minimalen Bluetooth-Signalstärkepegel, der höher als der erste minimale Bluetooth-Signalstärkepegel ist, überschreitet, Aktivieren des Überwachens, durch das Zahlungsendgerät, von Beschleunigungsmessersignalen, die durch die verbundene SMD erzeugt werden;
D) in Abhängigkeit von Änderungen eines kombinierten Bluetooth-Signalstärkepegels und den SMD-Beschleunigungsmessersignalen, die durch das Zahlungsendgerät überwacht werden, Aktivieren eines Zahlungstransaktionsmodus, wobei die sichere IP-Verbindung zum Austausch von Zahlungstransaktionsdaten zwischen der SMD und dem verbundenen Zahlungsendgerät ermöglicht wird; und
E) nach gegenseitiger Genehmigung der verbundenen SMD und des Zahlungsendgeräts, Bewirken einer finanziellen Zahlungstransaktion.

2. Verfahren zum Ermöglichen einer finanziellen Zahlungstransaktion nach Anspruch 1, **dadurch gekennzeichnet, dass** nach dem Realisieren der sicheren IP-Verbindung zwischen der SMD und dem Zahlungsendgerät gemäß Verarbeitungsschritt A) der Typ der das Bluetooth-Signal sendenden SMD durch das Zahlungsendgerät identifiziert wird und der zweite minimale Bluetooth-Signalstärkepegel zum Aktivieren des Überwachens, durch das Zahlungsendgerät, von Beschleunigungsmessersignalen, die durch die verbundene SMD erzeugt werden, in Abhängigkeit vom identifizierten SMD-Typ eingestellt wird.

3. Verfahren zum Ermöglichen einer finanziellen Zahlungstransaktion nach Anspruch 1 oder 2, **dadurch gekennzeichnet, dass** nach dem Realisieren der sicheren IP-Verbindung zwischen der SMD und dem Zahlungsendgerät gemäß Verarbeitungsschritt A) der Typ der das Bluetooth-Signal sendenden SMD durch das Zahlungsendgerät identifiziert wird und das Verarbeiten der SMD-Bluetooth-Signalstärke und der Beschleunigungsmessersignale gemäß Verarbeitungsschritt D) in Abhängigkeit vom identifizierten SMD-Typ erfolgt.

4. Verfahren zum Ermöglichen einer finanziellen Zahlungstransaktion nach einem der Ansprüche 1 bis 3, **dadurch gekennzeichnet, dass** nach dem Aktivieren des Zahlungstransaktionsmodus zwischen der verbundenen SMD und dem Zahlungsendgerät gemäß Verarbeitungsschritt D) der Zahlungstransaktionsmodus während mindestens einer definierten Periode unabhängig von den weiteren Änderungen des Bluetooth-Signalstärkepegels und der Beschleunigungsmessersignale der verbundenen SMD beibehalten wird.

5. Verfahren zum Ermöglichen einer finanziellen Zahlungstransaktion nach einem der Ansprüche 1 bis 3, **dadurch gekennzeichnet, dass** nach dem Aktivieren des Zahlungstransaktionsmodus zwischen der verbundenen SMD und dem Zahlungsendgerät gemäß Verarbeitungsschritt D) der Zahlungstransaktionsmodus so lange beibehalten wird, bis der überwachte Bluetooth-Signalstärkepegel unter einen vorausgewählten Trennungs-Bluetooth-Signalstärkepegel abnimmt.

6. Verfahren zum Ermöglichen einer finanziellen Zahlungstransaktion nach einem der vorhergehenden Ansprüche, **dadurch gekennzeichnet, dass** Charakteristiken einer spezifischen SMD in einer Datenbank des Zahlungsendgeräts gespeichert werden, um eine dedizierte Signalverarbeitung einer SMD zu ermöglichen, wenn eine wiederkehrende sichere IP-Verbindung zwischen der SMD und dem Zahlungsendgerät realisiert wird.

7. Verfahren zum Ermöglichen einer finanziellen Zahlungstransaktion nach Anspruch 6, **dadurch gekennzeichnet, dass** die SMD-Charakteristiken in einer zentralen Datenbank gespeichert werden, die Daten mit mindestens einem Zahlungsendgerät austauscht.

8. Verfahren zum Ermöglichen einer finanziellen Zahlungstransaktion nach einem der vorhergehenden Ansprüche, **dadurch gekennzeichnet, dass** die durch den Beschleunigungsmesser der verbundenen SMD erzeugten Signale, die Bewegungen in verschiedenen Dimensionen repräsentieren, auf ein einzelnes Signal, das Beschleunigungsmesserbewegungen repräsentiert, reduziert werden.

9. Verfahren zum Ermöglichen einer finanziellen Zahlungstransaktion nach einem der vorhergehenden Ansprüche, **dadurch gekennzeichnet, dass** mindestens eines von der SMD und/oder dem Zahlungsendgerät mit einem Back Office zum Bewirken einer angeforderten finanziellen Zahlungstransaktion kommuniziert.

10. Verfahren zum Ermöglichen einer finanziellen Zahlungstransaktion nach einem der vorhergehenden Ansprüche, **dadurch gekennzeichnet, dass** mit dem Aktivieren eines Zahlungstransaktionsmodus auch ein oder mehrere zusätzliche(r) Informationsaustausch(e), der/die Dienste zwischen dem Zahlungsendgerät und der SMD erfordert/erfordern, wie beispielsweise ein Austausch von loyalitätsbezogenen Informationen, Anzeigen, dedizierten Angeboten, Verbraucherverhaltensinformationen und so weiter, aktiviert wird/werden.

11. Verfahren zum Realisieren einer finanziellen Zahlungstransaktion, die nach einem der vorhergehenden Ansprüche gestartet wurde, wobei die angeforderte finanzielle Zahlungstransaktion an ein Zahlungstransaktions-Back Office übermittelt wird und nach einer Genehmigung durch das Zahlungstransaktions-Back Office an mindestens eines von der SMD und/oder dem Zahlungsendgerät zurückgemeldet wird.

12. Infrastruktur zum Ermöglichen des Starts einer finanziellen Zahlungstransaktion nach einem der Ansprüche 1 bis 10, wobei die Infrastruktur eine intelligente mobile Vorrichtung (SMD), einschließlich eines Beschleunigungsmessers, und ein intelligentes Zahlungsendgerät umfasst, wobei die Infrastruktur zum Durchführen der nachfolgenden Verfahrensschritte konfiguriert ist:
A) Realisieren einer sicheren IP-Verbindung für einen Datenaustausch, wie von gegenseitigen Identifikationsdaten, zwischen der SMD und dem Zahlungsendgerät basierend auf dem Empfang eines Bluetooth-Signals von der SMD durch das Zahlungsendgerät, das einen definierten ersten minimalen Bluetooth-Signalstärkepegel überschreitet;
B) Überwachen der Änderungen der SMD-Bluetooth-Signalstärke des durch das verbundene Zahlungsendgerät empfangenen Bluetooth-Signals;
C) nachdem die SMD-Bluetooth-Signalstärke des durch das verbundene Zahlungsendgerät empfangenen Bluetooth-Signals einen definierten zweiten minimalen Bluetooth-Signalstärkepegel, der höher als der erste minimale Bluetooth-Signalstärkepegel ist, überschreitet, Aktivieren des Überwachens, durch das Zahlungsendgerät, von Beschleunigungsmessersignalen, die durch die verbundene SMD erzeugt werden;
D) in Abhängigkeit von Änderungen eines kombinierten Bluetooth-Signalstärkepegels und den SMD-Beschleunigungsmessersignalen, die durch das Zahlungsendgerät überwacht werden, Aktivieren eines Zahlungstransaktionsmodus, wobei die sichere IP-Verbindung zum Austausch von Zahlungstransaktionsdaten zwischen der SMD und dem verbundenen Zahlungsendgerät ermöglicht wird; und
E) nach gegenseitiger Genehmigung der verbundenen SMD und des Zahlungsendgeräts, Bewirken einer finanziellen Zahlungstransaktion.

13. Infrastruktur für finanzielle Zahlungstransaktionen nach Anspruch 12, **dadurch gekennzeichnet, dass** das intelligente Zahlungsendgerät außerdem mit einem Bluetooth-Signalgeber zum Ermöglichen einer direkten Kommunikation zwischen dem intelligenten Zahlungsendgerät und einer verbundenen SMD versehen ist.

14. Infrastruktur für finanzielle Zahlungstransaktionen nach Anspruch 12 oder 13, **dadurch gekennzeichnet, dass** das intelligente Zahlungsendgerät mit einer Datenbank mit SMD-gekoppelten technischen Spezifikationen basierend auf vorhergehenden SMD-initiierten finanziellen Zahlungstransaktionen verbunden ist.

15. Infrastruktur für finanzielle Zahlungstransaktionen nach einem der Ansprüche 12 bis 14, **dadurch gekennzeichnet, dass** das intelligente Zahlungsendgerät mit einer Datenbank mit SMD-gekoppelten Informationen basierend auf vorhergehenden SMD-initiierten finanziellen Zahlungstransaktionen verbunden ist.

## Revendications

1. Procédé d'activation d'une transaction de paiement financière entre un dispositif mobile intelligent (SMD) comprenant un accéléromètre et un terminal de paiement, comprenant les étapes de procédé suivantes :
A) la réalisation d'une connexion IP sécurisée pour l'échange de données, telles que des données d'identification mutuelle, entre le SMD et le terminal de paiement sur la base de la réception d'un signal Bluetooth du SMD par le terminal de paiement qui dépasse un premier niveau d'intensité de signal Bluetooth minimal défini ;
B) la surveillance des changements de l'intensité de signal Bluetooth de SMD du signal Bluetooth reçu par le terminal de paiement connecté ;
C) après que l'intensité de signal Bluetooth de SMD du signal Bluetooth reçu par le terminal de paiement connecté a dépassé un second niveau d'intensité de signal Bluetooth minimal défini qui est supérieur au premier niveau d'intensité de signal Bluetooth minimal ; l'activation de la surveillance par le terminal de paiement des signaux d'accéléromètre générés par le SMD connecté ;
D) en fonction des changements combinés de niveau d'intensité de signal Bluetooth et des signaux d'accéléromètre de SMD surveillés par le terminal de paiement, l'activation d'un mode de transaction de paiement dans lequel la connexion IP sécurisée est activée pour échanger des données de transaction de paiement entre le SMD et le terminal de paiement connecté ; et
E) lors d'une approbation mutuelle du SMD connecté et du terminal de paiement, la réalisation d'une transaction de paiement financière.

2. Procédé d'activation d'une transaction de paiement financière selon la revendication 1, **caractérisé en ce que**, après la réalisation de la connexion IP sécurisée entre le SMD et le terminal de paiement selon l'étape de traitement A), le type de SMD émettant le signal Bluetooth est identifié par le terminal de paiement et le second niveau d'intensité de signal Bluetooth minimal pour activer la surveillance par le terminal de paiement des signaux d'accéléromètre générés par le SMD connecté est défini en fonction du type de SMD identifié.

3. Procédé d'activation d'une transaction de paiement financière selon la revendication 1 ou 2, **caractérisé en ce que**, après la réalisation de la connexion IP sécurisée entre le SMD et le terminal de paiement selon l'étape de traitement A), le type de SMD émettant le signal Bluetooth est identifié par le terminal de paiement et le traitement de l'intensité de signal Bluetooth de SMD et des signaux d'accéléromètre selon l'étape de traitement D) est rendu dépendant du type de SMD identifié.

4. Procédé d'activation d'une transaction de paiement financière selon l'une des revendications 1 à 3, **caractérisé en ce que**, après l'activation du mode de transaction de paiement entre le SMD connecté et le terminal de paiement selon l'étape de traitement D), le mode de transaction de paiement est maintenu pendant au moins une période définie, indépendamment des changements supplémentaires du niveau d'intensité de signal Bluetooth et des signaux d'accéléromètre du SMD connecté.

5. Procédé d'activation d'une transaction de paiement financière selon l'une des revendications 1 à 3, **caractérisé en ce que**, après l'activation du mode de transaction de paiement entre le SMD connecté et le terminal de paiement selon l'étape de traitement D), le mode de transaction de paiement est maintenu jusqu'à ce que le niveau d'intensité de signal Bluetooth surveillé diminue en dessous d'un niveau d'intensité de signal Bluetooth de déconnexion présélectionné.

6. Procédé d'activation d'une transaction de paiement financière selon l'une des revendications précédentes, **caractérisé en ce que** les caractéristiques d'un SMD spécifique sont stockées dans une base de données du terminal de paiement pour activer un traitement de signal dédié d'un SMD lorsqu'une connexion IP sécurisée récurrente est réalisée entre le SMD et le terminal de paiement.

7. Procédé d'activation d'une transaction de paiement financière selon la revendication 6, **caractérisé en ce que** les caractéristiques de SMD sont stockées dans une base de données centrale qui échange des données avec au moins un terminal de paiement.

8. Procédé d'activation d'une transaction de paiement financière selon l'une des revendications précédentes, **caractérisé en ce que** les signaux générés par l'accéléromètre du SMD connecté représentant des mouvements dans diverses dimensions sont réduits à un seul signal représentant les mouvements de l'accéléromètre.

9. Procédé d'activation d'une transaction de paiement financière selon l'une des revendications précédentes, **caractérisé en ce qu'**au moins l'un parmi le SMD et/ou le terminal de paiement communique avec un arrière-guichet pour effectuer une transaction de paiement financière demandée.

10. Procédé d'activation d'une transaction de paiement financière selon l'une des revendications précédentes, **caractérisé en ce que**, avec l'activation d'un mode de transaction de paiement également un ou plusieurs services nécessitant un échange d'informations supplémentaires entre le terminal de paiement et le SMD sont activés, comme par exemple l'échange d'informations liées à la fidélité, de publicités, d'offres dédiées, d'informations sur le comportement des consommateurs, et ainsi de suite.

11. Procédé de réalisation d'une transaction de paiement financière qui a été lancée selon l'une des revendications précédentes, dans lequel la transaction de paiement financière demandée est soumise à un arrière-guichet de transaction de paiement et, après l'approbation par l'arrière-guichet de transaction de paiement, est renvoyée à au moins l'un parmi le SMD et/ou le terminal de paiement.

12. Infrastructure pour permettre le lancement d'une transaction de paiement financière selon l'une des revendications 1 à 10, ladite infrastructure comprenant un dispositif mobile intelligent (SMD) comprenant un accéléromètre et un terminal de paiement intelligent, dans laquelle ladite infrastructure est configurée pour effectuer les étapes de procédé suivantes :
A) la réalisation d'une connexion IP sécurisée pour l'échange de données, telles que des données d'identification mutuelle, entre le SMD et le terminal de paiement sur la base de la réception d'un signal Bluetooth du SMD par le terminal de paiement qui dépasse un premier niveau d'intensité de signal Bluetooth minimal défini ;
B) la surveillance des changements de l'intensité de signal Bluetooth de SMD du signal Bluetooth reçu par le terminal de paiement connecté ;
C) après que l'intensité de signal Bluetooth de SMD du signal Bluetooth reçu par le terminal de paiement connecté a dépassé un second niveau d'intensité de signal Bluetooth minimal défini qui est supérieur au premier niveau d'intensité de signal Bluetooth minimal ; l'activation de la surveillance par le terminal de paiement des signaux d'accéléromètre générés par le SMD connecté ;
D) en fonction des changements combinés de niveau d'intensité de signal Bluetooth et des signaux d'accéléromètre de SMD surveillés par le terminal de paiement, l'activation d'un mode de transaction de paiement dans lequel la connexion IP sécurisée est activée pour échanger des données de transaction de paiement entre le SMD et le terminal de paiement connecté ; et
E) lors d'une approbation mutuelle du SMD connecté et du terminal de paiement, la réalisation d'une transaction de paiement financière.

13. Infrastructure pour transactions de paiement financières selon la revendication 12, **caractérisée en ce que** le terminal de paiement intelligent est également muni d'un émetteur de signal Bluetooth pour permettre une communication directe entre le terminal de paiement intelligent et un SMD connecté.

14. Infrastructure pour transactions de paiement financières selon la revendication 12 ou 13, **caractérisée en ce que** le terminal de paiement intelligent est connecté à une base de données avec des spécifications techniques couplées au SMD sur la base des transactions de paiement financières précédentes initiées par le SMD.

15. Infrastructure pour transactions de paiement financières selon l'une des revendications 12 à 14, **caractérisée en ce que** le terminal de paiement intelligent est connecté à une base de données avec des informations couplées au SMD sur la base des transactions de paiement financières précédentes initiées par le SMD.
